# EUROPEAN PATENT APPLICATION

(11) **EP 2 487 889 A1**
(43) Date of publication of application: **15.08.2012**
(21) Application number: 12154518.0
(22) Date of filing: 08.02.2012
(51) Int. Cl.: H04M 3/42, H04L 12/58, H04W 4/14

(54) **Message handling method and system**

(30) Priority: 11.02.2011 US 201161441821 P; 20.06.2011 KR 20110059716
(71) Applicant: Samsung Electronics Co., Ltd, Gyeonggi-do (KR)
(72) Inventor: Baek, Sung Hwan, Gyeonggi-do (KR); Chung, Do Hee, Gyeonggi-do (KR)
(74) Representative: Harrison Goddard Foote

(57) **Abstract**

A method and system for handling a message are provided. A terminal can translate a message composed by the user into a target language and send the translated message to a recipient terminal. The application shows using a translation server, rather than the terminal, to perform the conversion from one language to the other. The terminal can also translate a received message written in a language other than the language selected by the user into the language selected by the user and display the translated message. The method includes composing, by a sender terminal, a message, checking whether a translation feature is activated for message translation, transmitting, when the translation feature is not activated, the composed message to a receiver terminal, and translating, when the translation feature is activated, the composed message, and transmitting the translated message to the receiver terminal.

## Description

### BACKGROUND OF THE INVENTION

### 1. Field of the Invention:

The present invention relates to a message handling method and system. More particularly, although not exclusively, the present invention relates to a message handling method and system in which a terminal can translate a message composed by the user into a target language and send the translated message to a recipient terminal.

In addition, the present invention relates to a message handling method and system in which a terminal can translate a received message written in a language other than the language selected by the user into the language selected by the user and display the translated message.

### 2. Description of the Related Art:

Recent advances in communication and semiconductor technologies have enabled worldwide popularization of mobile terminals. Accordingly, mobile terminals have become a necessity of modem life. Such mobile terminals enable a user to make and receive a voice call and to send and receive a message. The messages which a terminal may send and receive may include a Short Message Service (SMS) message, an Instant Messaging (IM) message, or the like.

A mobile terminal may support only a simple message handling function that enables a user to send a composed message to another terminal and to view a received message. Users communicating with different languages may have difficulty in sending and receiving messages to/from each other with mobile terminals that support only simple functions (e.g., a simple message handling function). For example, to send a message from a first user to a second user, the first user may have to write a message in a language understandable by both the first user and the second user. Alternatively, the first user may have to convert a composed message into a language understandable by the second user through a separate translation program and send the translated message to the second user. In addition, to understand a received message written in a language unfamiliar to the first user, the first user may have to convert the received message into a language understandable by the first user through a separate translation program. As described above, users using different languages may experience difficulty in exchanging messages with existing mobile terminals.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

Certain aspects of the present invention aim to address at least the above-mentioned problems and/or disadvantages and to provide at least the advantages described below. Accordingly, an aspect of the present invention provides a message handling method and system that enable a user to translate a composed message into a target language and send the translated message.

Another aspect of the present invention provides a message handling method and system that enable a user to translate a received message written in an unfamiliar language into a preset language and view the translated message.

In accordance with an aspect of the present invention, a message handling method is provided. The method includes composing, by a sender terminal, a message, checking whether a translation feature is activated for message translation, transmitting, if the translation feature is not activated, the composed message to a receiver terminal, and translating, if the translation feature is activated, the composed message, and transmitting the translated message to the receiver terminal.

In accordance with another aspect of the present invention, a message handling system is provided. The system includes a sender terminal, a translation server, a messaging server and a receiver terminal, wherein the sender terminal sends a translation request for a composed message to the translation server, receives a translated message from the translation server and sends the translated message to the messaging server, wherein the translation server translates a requested message and sends the translated message to the sender terminal, wherein the messaging server transmits a message received from the sender terminal to the receiver terminal, and wherein the receiver terminal receives a translated message from the messaging server.

In accordance with another aspect of the present invention, a message handling system is provided. The system includes a sender terminal, a messaging server, a translation server and a receiver terminal, wherein the sender terminal sends a translation request comprising a composed message and a target language indication to the messaging server, wherein the messaging server receives the translation request from the sender terminal, forwards the translation request to the translation server, receives a translated message from the translation server and sends the translated message to the receiver terminal, wherein the translation server translates a requested message into a language indicated by a target language indication and sends the translated message to the messaging server, and wherein the receiver terminal receives a translated message from the messaging server.

In accordance with other aspects of the present invention, there is provided a sender terminal adapted for use in a message handling system, and a message handling method for such a sender terminal, according to any of the above aspects.

In accordance with other aspects of the present invention, there is provided a receiver terminal adapted for use in a message handling system, and a message handling method for such a receiver terminal, according to any of the above aspects.

In accordance with other aspects of the present invention, there is provided a translation server adapted for use in a message handling system, and a message handling method for such a translation server, according to any of the above aspects.

In accordance with other aspects of the present invention, there is provided a messaging server adapted for use in a message handling system, and a message handling method for such a messaging server, according to any of the above aspects.

Another aspect of the invention provides a computer program comprising instructions arranged, when executed, to implement a method and/or apparatus and/or system in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects and features and advantages of certain exemplary embodiments and aspects of the present invention will be more apparent from the following description taken in conjunction with the accompanying drawings, in which:
FIG. 1 illustrates a message handling system according to an exemplary embodiment of the present invention;
FIG. 2 is a block diagram of a mobile terminal according to an exemplary embodiment of the present invention;
FIG. 3 is a flowchart of a message transmission method for a mobile terminal according to an exemplary embodiment of the present invention;
FIG. 4 is a flowchart of a message reception method for a mobile terminal according to an exemplary embodiment of the present invention;
FIG. 5 is screen representations depicting SMS message transmission according to an exemplary embodiment of the present invention; and
FIG. 6 is screen representations depicting IM message transmission and reception according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the description, the mobile terminal of the present invention is a terminal capable of sending and receiving messages, and may be a personal digital assistant (PDA), a mobile communication terminal, a smart phone, a tablet personal computer, a notebook computer, any computer, or the like. When a mobile terminal performs message transmission, it may be referred to as a sender terminal; and when a mobile terminal performs message reception, it may be referred to as a receiver terminal. For ease of description, when it is unnecessary to distinguish an SMS message from an IM message, the SMS message and the IM message are collectively referred to as a message.

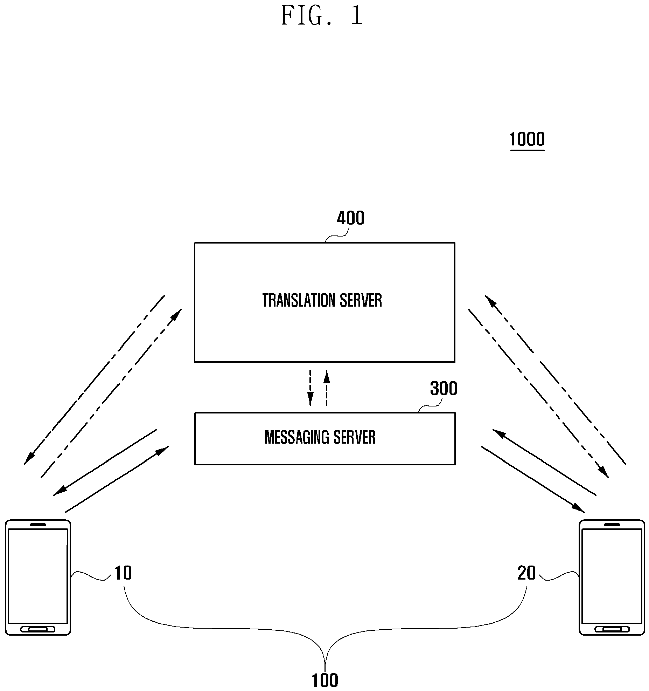

FIG. 1 illustrates a message handling system according to an exemplary embodiment of the present invention.

Referring to FIG. 1, the message handling system 1000 may include a sender terminal 10, a receiver terminal 20, a messaging server 300, and a translation server 400.

The sender terminal 10 is a mobile terminal sending a message. In particular, if a menu item for translation is selected after a message is composed, the sender terminal 10 may send a translation request including the composed message and a target language indication to the translation server 400, receive a translated message in the target language from the translation server 400, and send the translated message to the messaging server 300. The sender terminal 10 may provide a function for editing the translated message after reception thereof. For example, the sender terminal 10 may allow a user to edit the translated message after the translated message is received form the translation server 400 and before the translated message is sent to the messaging server 300. As another example, if the instant translation feature is activated, then when a menu item for sending a composed message is selected, the sender terminal 10 may send a translation request to the translation server 400, receive a translated message from the translation server 400, and send the translated message to the messaging server 300. For example, if the instant translation feature is activated, then the sender terminal 10 may automatically send a translation request to the translation server 400 when the sender terminal 10 is instructed to send composed messages. The sender terminal 10 may be configured to send the translated message alone for various reasons such as message size limitations and additional fees for long messages.

When there is no need to consider message size limitations or additional fees, the sender terminal 10 may transmit both the composed (original) message text and translated message text (e.g., the transmitted message may include text corresponding to the sender's native language and text corresponding to a language understandable by the intended recipient). To achieve this, the sender terminal 10 may provide an option for setting simultaneous transmission of the original message and the translated message. If such a simultaneous transmission option is set, then the sender terminal 10 may insert a preset separator between the original message text and the translated message text for clear distinction between the original message text and the translated message text. For example, the sender terminal 10 may insert a preset separator such as, for example, '&' or '/' between the original message text and the translated message text. The sender terminal 10 may also send the original message text and the translated message text together without insertion of a separator. In order to enhance readability of the transmitted message, the receiver terminal 20 may use a language analysis program that is capable of recognizing language encodings so as to separate the original message text from the translated message text.

When the translation server 400 and the messaging server 300 work in cooperation, the sender terminal 10 may send a translation request to the messaging server 300 instead of the translation server 400. The translation request may include the composed message text and a target language indication.

The receiver terminal 20 is a mobile terminal receiving a message. That is, the receiver terminal 20 may receive a message from the sender terminal 10 via the messaging server 300. The message may include at least one of original message text and translated message text. When the translation feature is not activated, the receiver terminal 20 may display the received message. When the received message includes both original message text and translated message text, the receiver terminal 20 may display the original message text and translated message text in different regions.

When the translation feature is activated, the receiver terminal 20 may identify the language of the received message and check whether the identified language is the same as a language preset by the recipient user. When the identified language is different from the preset language, the receiver terminal 20 may send a translation request for translation of the received message to the translation server 400. To achieve this, the receiver terminal 20 may send a translation request including the received message and a target language indication (e.g., the language of the recipient user) to the translation server 400, receive a translated message from the translation server 400, and display the received message and/or the translated message. Thereafter, if a retranslation command is entered for translation of the translated message, the receiver terminal 20 may send a retranslation request to the translation server 400. The retranslation request may include the initially received message and a target language indication.

The messaging server 300 may deliver a message from the sender terminal 10 to the receiver terminal 20. That is, the messaging server 300 enables the sender terminal 10 and the receiver terminal 20 to exchange messages. The messaging server 300 may be a Short Message Service Center (SMSC) handing SMS messages, an IM server handling IM messages, or the like. When a translation request including a source message and a target language indication is received from the sender terminal 10, the messaging server 300 may forward the translation request to the translation server 400, receive a translated message in the target language from the translation server 400, and send the translated message to the receiver terminal 20.

The translation server 400 provides language translation services. The translation server 400 may translate a message received from the sender terminal 10 or receiver terminal 20 and send a translated message to the sender terminal 10 or receiver terminal 20. In one exemplary embodiment, the translated message may include an indication of the language of the translated message (e.g. in a message field or in metadata of the message). In other words, the translation server 400 may receive a request for translation of a message received from the sender terminal 10 or the receiver terminal 20. After the translation server 400 translates the message, the translation server 400 sends the translated message to the terminal from which the translation request was received. The translation server 400 may receive a target language indication together with a message to be translated. The translation server 400 may also work in cooperation with the messaging server 300. When the translation server 400 works in cooperation with the messaging server 300, the translation server 400 may receive a translation request from the messaging server 300.

In the above description, although the messaging server 300 and the translation server 400 are depicted as being separate entities, the messaging server 300 and the translation server 400 may be configured as a single entity. Although the translation server 400 is described as returning, in response to a translation request, one translated message to the sender terminal 10, the translation server 400 may return multiple translated messages to the sender terminal 10 to enable the sending user (e.g., the user operating the sending terminal) to select a suitable translated message. Similarly, the translation server 400 may return multiple translated messages to the receiver terminal 20.

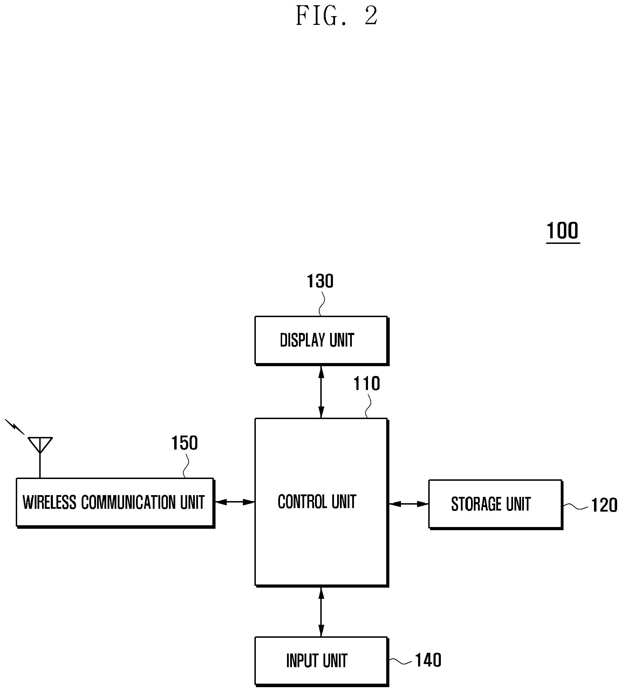

FIG. 2 is a block diagram of the mobile terminal 100 according to an exemplary embodiment of the present invention.

Referring to FIGS. 1 and 2, the mobile terminal 100 may include a wireless communication unit 150, an input unit 140, a display unit 130, a storage unit 120, and a control unit 110. The mobile terminal 100 having the above described configuration may function as a sender terminal 10 sending a message or a receiver terminal 20 receiving a message depending on circumstances. In the following description, the mobile terminal 100 may be used as a sender terminal 10 or a receiver terminal 20.

The wireless communication unit 150 may establish a communication channel with a base station for a voice call, a data call, and/or a video call. To achieve this, the wireless communication unit 150 may include a radio frequency transmitter (not shown) for upconverting the frequency of a signal to be transmitted and amplifying the signal, a radio frequency receiver (not shown) for low-noise amplifying a received signal and downconverting the frequency of the received signal, and a duplexer (not shown) for separating a transmit signal from a receive signal. In particular, the wireless communication unit 150 may send and receive messages. More specifically, in the event that the mobile terminal 100 acts as a sender terminal 10, the wireless communication unit 150 may send, in response to an input for a translation request, a composed message to the translation server 400. For example, if a user indicates via the input unit 140 that the composed message is to be translated, the wireless communication unit 150 may send the composed message to the translation server 400. The communication unit 150 may also send a target language indication together with the composed message. The target language may be pre-specified or be selected by the user upon request. Thereafter, the wireless communication unit 150 may receive a translated message from the translation server 400 and forward the translated message to the messaging server 300. If an editing function is provided, the mobile terminal 100 may edit the translated message and the wireless communication unit 150 may send the edited message to the messaging server 300. For example, if an editing function is provided, the control unit 110 may edit the translated message. As another example, if an editing function is provided, the mobile terminal 100 may allow a user to edit the translated message via the input unit 140. When the translation server 400 interworks with the messaging server 300, the wireless communication unit 150 may send a translation request including the composed message and a target language indication to the messaging server 300.

In the event that the mobile terminal 100 acts as a receiver terminal 20, the wireless communication unit 150 may receive a message from the messaging server 300. The received message may include at least one of original message text and translated message text. When a retranslation command is entered for the received message, the wireless communication unit 150 may send a retranslation request to the translation server 400. The retranslation request may include the received message and a target language indication.

The input unit 140 may include a plurality of alphanumeric and function keys for inputting alphanumeric information and for setting various functions. In particular, the input unit 140 may generate various input signals to handle messages. For example, the input unit 140 may generate a signal to enter a translation command for a composed message, a signal to specify a target language for translation, a signal to send a translation request, a signal to edit a translated message, a signal to enter a translation command for a received message, a signal to turn on and off the translation feature, and a signal to enter a retranslation command for a received message. The input unit 140 may be realized using at least one of a key pad of buttons, a ball joystick, an optical joystick, a wheel key, a touch key, a touch pad, a touch screen, a combination thereof, and the like.

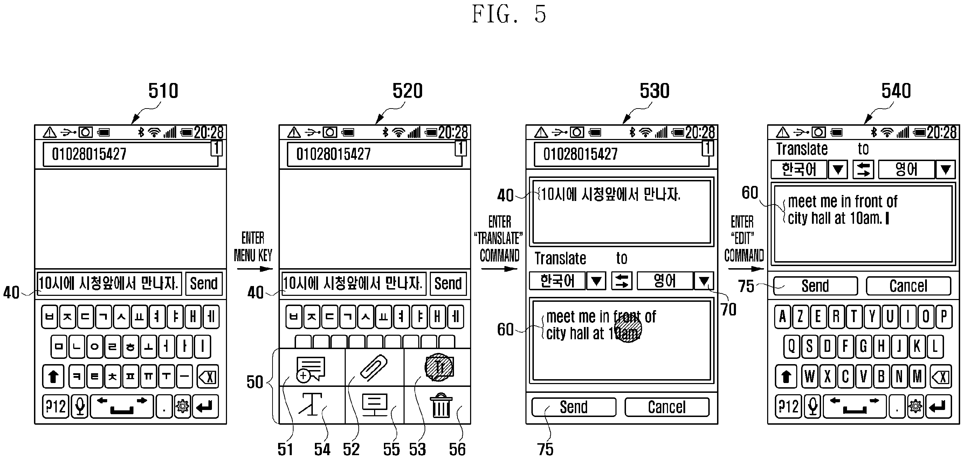

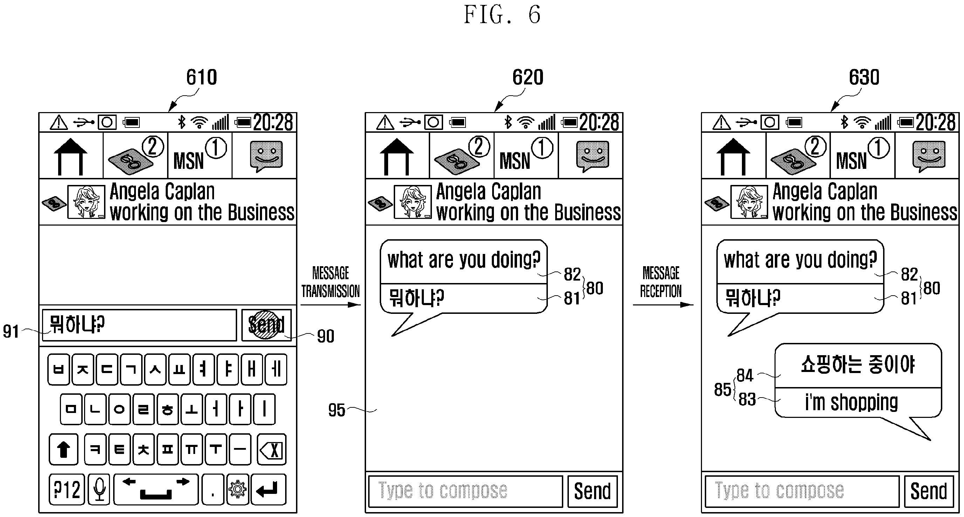

The display unit 130 displays various menus of the mobile terminal 100, information input by the user, and information to be provided to the user. For example, the display unit 130 may display various screens such as a home screen of pages, a message handling screen, and a call handling screen in the course of utilizing the mobile terminal 100. In particular, the display unit 130 may display screens such as a message composition screen, an editing screen for a translated message and a message viewing screen. Such screens are described later in connection with FIGS. 5 and 6. The display unit 130 may be realized using Liquid Crystal Display (LCD) devices, Organic Light Emitting Diodes (OLED), Active Matrix Organic Light Emitting Diodes (AMOLED), or the like. If the display unit 130 has a touchscreen capability, the display unit 130 may act as an input means.

The storage unit 120 may store application programs and related data for realizing functions of the mobile terminal 100. For example, the storage unit 120 may store an Operating System (OS) for booting and operating the mobile terminal 100, and other application programs related to images, sounds and short-range wireless communication. In particular, the storage unit 120 may store indications for user languages and target languages. A user language refers to a language used by the user of the mobile terminal 100, and may be specified by the manufacturer or the user. A user language may be specified according to the Mobile Country Code (MCC) of the user identity card assigned to the mobile terminal 100. The user identity card is used for subscriber authentication and may be a Subscriber Identity Module (SIM), a Universal Subscriber Identity Module (USIM), or a User Information Module (UIM). As another example, the user identity card may store an indication of a user irrespective of the MCC of the user identity card assigned to the mobile terminal 100. The target language corresponds to a user language of the user of the receiver terminal 20. A target language may be specified by the user or be selected from a target language list, which is output in response to a translation command. For example, assume that a Korean user and an American user exchange a message. As to the Korean user, a user language may be Korean and a target language may be English. As to the American user, a user language may be English and a target language may be Korean.

The storage unit 120 may store a language analysis program that determines a language used to write a message through Unicode analysis. The language analysis program analyzes a received message and notifies the control unit 110 of the language used to write the received message. The language analysis program may also be used to separate original message text and translated message text included in a received message.

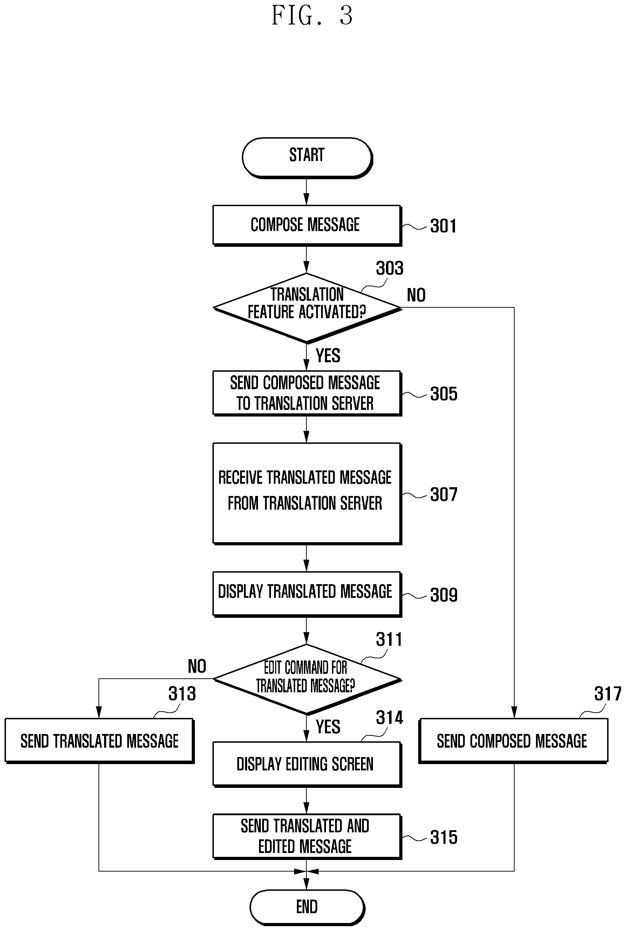

The control unit 110 may control the overall operation of the mobile terminal 100 and control signal exchange between components thereof. In particular, the control unit 110 may control message transmission and reception operations involving message translation. For example, in the event that the mobile terminal 100 acts as a sender terminal 10, the control unit 110 may check activation of the translation feature in response to a message transmission request. In other words, in response to a message transmission request, the control unit 110 may check to determine whether a translation feature is activated. If the translation feature is not activated, then the control unit 110 may send a composed message to the receiver terminal 20 without translation. If the translation feature is activated, then the control unit 110 may control an operation to translate the composed message and send the translated message to the receiver terminal 20. For example, the control unit 110 may send a translation request to the translation server 400 or the messaging server 300. If the control unit 110 sends a translation request to the messaging server 300, then the messaging server 300 may forward the translation request to the translation server 400, receive a translated message from the translation server 400, and send the translated message to the receiver terminal 20. The message transmission operation of the control unit 110 is described later with reference to FIG. 3.

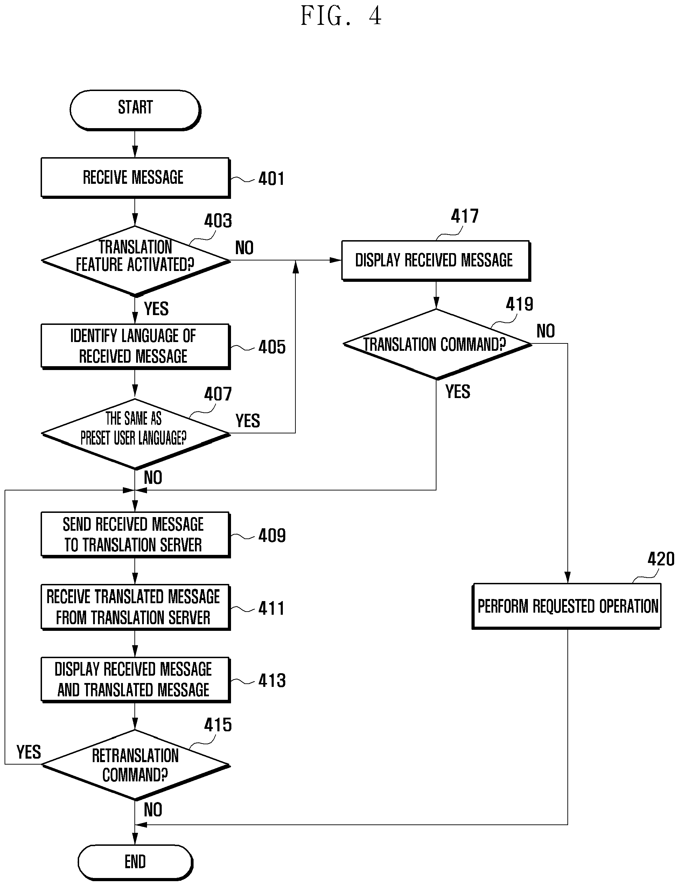

In the event that the mobile terminal 100 acts as a receiver terminal 20, when a message is received, the control unit 110 may check activation of the translation feature. If the translation feature is not activated, then the control unit 110 may control an operation to directly display the received message. If the received message includes both original message text and translated message text, then the control unit 110 may separately display the original message text and translated message text. If the translation feature is activated, then the control unit 110 may identify the language of the received message and check whether the identified language is the same as a user language preset by the recipient user. If the identified language is different from the user language, then the control unit 110 may control an operation to translate the received message into the user language and display a translated message. The message reception operation of the control unit 110 is described later with reference to FIG. 4.

Although not shown in FIG. 2, the mobile terminal 100 may further include at least one of a camera module for capturing still or moving images of a target object, a broadcast reception module for receiving digital broadcasts, a digital music playback module like an MP3 player, a short-range communication module for short-range communication, and a proximity sensor module for contactless sensing. With the digital convergence trend, it should be apparent to those skilled in the art that the mobile terminal 100 may further include a unit comparable to the above-described units, and one unit thereof may be removed or replaced with another unit.

FIG. 3 is a flowchart of a message transmission method for a mobile terminal according to an exemplary embodiment of the present invention.

Referring to FIG. 3, the user of the sender terminal 10 composes a message (to be sent to the receiver terminal 20) using a message composition function at step 301. The message may be written in a user language, and may be, for example, an SMS message or IM message.

The control unit 110 of the sender terminal 10 checks whether the translation feature is activated at step 303. The translation feature may be activated by a user by entering a menu item for message translation, or automatically by default.

If the translation feature is not activated, then in response to a message transmission request, the control unit 110 sends the composed message to the receiver terminal 20 through the messaging server 300 at step 317. If the translation feature is activated, then the control unit 110 sends a translation request including the composed message and a target language indication to the translation server 400 at step 305. Here, the target language indication indicates a target language (e.g., English, French, Japanese, or Chinese), into which the message is to be translated. The target language may be specified and stored in advance or be selected using a popup window when the translation request is made.

The control unit 110 receives a translated message from the translation server 400 at step 307, and displays the translated message in a region of the display unit 130 at step 309. As an example, the composed message and translated message may be displayed together.

The control unit 110 checks whether an edit command is entered for the translated message at step 311. If an edit command is not entered for the translated message, then the control unit 110 sends the translated message in response to a message transmission command from the user at step 313. The translated message is sent to the messaging server 300, which then forwards the translated message to the receiver terminal 20. If an edit command is entered for the translated message, then the control unit 110 displays an editing screen at step 314. The user may edit the translated message using the input unit 140. Thereafter, in response to a message transmission command from the user, the control unit 110 sends the translated and edited message at step 315.

In the above description, the sender terminal 10 sends a translation request to the translation server 400. However, exemplary embodiments of the present invention are not limited thereto. For example, if the translation feature is activated, the control unit 110 may send a translation request including the composed message and a target language indication to the messaging server 300. The messaging server 300 may then forward the translation request to the translation server 400, receive a translated message from the translation server 400, and send the translated message to the receiver terminal 20. In the above description, the sender terminal 10 sends only a translated message to the receiver terminal 20. However, the sender terminal 10 may also send a composed message and translated message together to the receiver terminal 20. To achieve this, the sender terminal 10 may provide an option for setting simultaneous transmission of the original message and translated message. If such a simultaneous transmission option is set, then the sender terminal 10 may insert a preset separator between the original message and the translated message for clear distinction between the original message text and the translated message text. The sender terminal 10 may insert a preset separator such as, for example, '&' or '/' between the original message text and the translated message text. The sender terminal 10 may also send the original message text and the translated message text together without insertion of a separator. The receiver terminal 20 may use a language analysis program to separate the original message text from the translated message text.

FIG. 4 is a flowchart of a message reception method for a mobile terminal according to an exemplary embodiment of the present invention.

Referring to FIG. 4, the receiver terminal 20 receives a message at step 401. The received message may be an SMS message, an IM message, or the like. Upon reception of a message, the control unit 110 of the receiver terminal 20 checks whether the translation feature is activated at step 403. If the translation feature is not activated, then the control unit 110 displays the received message on the display unit 130 at step 417. If the received message includes only one of the original message text and the translated message text, then the received message may be directly displayed. If the received message includes both the original message text and translated message text, then the control unit 110 may separately display the original message text and translated message text.

During display of the received message, the control unit 110 checks whether a translation command is entered for the received message at step 419. If a translation command is entered for the received message, then the control unit 110 proceeds to step 409. If a translation command is not entered for the received message, then the control unit 110 may perform a requested operation at step 420. For example, according to a user request, the control unit 110 may compose a response message, delete the received message, or display an idle screen.

If the translation feature is activated at step 403, then the control unit 110 identifies the language of the received message at step 405. To achieve this, the receiver terminal 20 may be equipped with a language analysis program that identifies a language used to write a message through Unicode analysis. Alternatively, the language of the received message may be indicated in the message itself (e.g. in a message field or in metadata of the message). The control unit 110 checks whether the identified language is the same as a user language preset by the recipient user at step 407. If the identified language is the same as the user language, the control unit 110 proceeds to step 417. The received message may include only the translated message text or include both the original message text and translated message text. If the identified language of either the original message text or the translated message text is not the same as the user language, then the control unit 110 sends a translation request including the received message and a target language indication (e.g., identifying the user language) to the translation server 400 at step 409. The control unit 110 receives a translated message from the translation server 400 at step 411, and displays the received message and translated message on the display unit 130 at step 413.

The control unit 110 checks whether a retranslation command is entered for the displayed message at step 415. If a retranslation command is entered, then the control unit 110 returns to step 409. In response to the retranslation command, the control unit 110 may display a popup window for selecting a target language. Hence, step 409 may be repeated with a new target language.

FIG. 5 illustrates screen representations depicting SMS message transmission according to an exemplary embodiment of the present invention. In the following description, it is assumed that a translation command is entered using a menu option after message composition.

Referring to FIG. 5, as illustrated in screen 510, the user may compose a message 40 by executing a message composition function. If a preset menu key is entered after composition of the message 40, then as illustrated in screen 520, a menu window 50 having options available for message composition may be output in a lower region of the display unit 130. For example, as illustrated in screen 520, the menu window 50 may have an "add-contact" item 51, an "attach-file" item 52, a "translate" item 53, a "change-typeface" item 54, a "list-view" item 55 and a "delete" item 56. The menu window 50 is illustrative only, and may have other items. If the "translate" item 53 is selected from the menu window 50, then the control unit 110 may send a translation request for the composed message 40 to the translation server 400. If a translated message is received from the translation server 400, then as illustrated in screen 530, the control unit 110 may separately output the composed message 40 and the translated message 60 on the display unit 130. If a "send" button 75 is entered in screen 530, then the control unit 110 may transmit the translated message 60 to the messaging server 300. If the user changes the target language through a "target language" item 70 illustrated in screen 530, then the control unit 110 may send a translation request including the composed message 40 and a new target language indication to the translation server 400. For example, if the user selects French as a target language by manipulating the "target language" item 70, then the control unit 110 may send a translation request including the composed message 40 and a target language indication (i.e., indication that the target language is French) to the translation server 400, and receive a translated message in French therefrom.

As illustrated in screen 530, if the user touches a region where the translated message 60 is displayed, then the control unit 110 may control the display unit 130 to display an editing screen for editing the translated message 60 as illustrated in screen 540. As illustrated in screen 540, the region where the translated message 60 is displayed is moved to an upper portion of the display unit 130, and a virtual keypad for character input is displayed in a lower region. If a "send" button 75 is entered in the editing screen (i.e., in screen 540), then the control unit 110 may transmit the translated and edited message to the messaging server 300.

FIG. 6 illustrates screen representations depicting IM message transmission and reception according to an exemplary embodiment of the present invention. In the following description, the instant translation feature is assumed to be activated.

Referring to FIG. 6, if the instant messaging function is executed, as illustrated in screen 610, then the control unit 110 of the sender terminal 10 controls the display unit 130 to display a dialog screen. In the dialog screen, the user may compose an IM message in a message composition field 91 and enter a message transmission command by touching an "IM send" button 90. The control unit 110 may then send a translation request including the IM message and a preset target language indication to the translation server 400, receive a translated IM message from the translation server 400, and send the composed IM message text and translated IM message text to the messaging server 300. The control unit 110 may control the display unit 130 to remove the virtual keypad and display the composed IM message text and translated IM message text in an IM message display region 95. For example, as illustrated in screen 620, the composed IM message text 81 (i.e., Korean) is displayed in the lower portion of a first speech balloon 80 and the translated IM message text 82 (i.e., English) is displayed in the upper portion thereof in the IM message display region 95.

If the receiver terminal 20 receives an IM message from the messaging server 300, then as illustrated in screen 630, the display unit 130 may display a second speech balloon 85 including the received IM message under the first speech balloon 80. In screen 630, unlike the first speech balloon 80, the second speech balloon 85 includes Korean IM message text 84 in the upper portion and English IM message text 83 in the lower portion. This is because, as to the receiver terminal 20, the user language is English and the target language is Korean.

In a feature of exemplary embodiments of the present invention, the message handling method and system provide an instant translation function when messages are sent and received. Hence, users using different languages may exchange messages in an easy way. In addition, to translate a message to be sent or a received message, the user of a mobile terminal does not have to use a separate translation program and may directly use a translation function of a provided messaging program, thereby enhancing user convenience.

According to exemplary embodiments of the present invention, the message handling method may be implemented as computer programs and may be stored in various computer readable storage media. The computer readable storage media may store program instructions, data files, data structures and combinations thereof. The program instructions may include instructions developed specifically for the present invention and existing general-purpose instructions.

The computer readable storage media may include magnetic media such as a hard disk and floppy disk, optical media such as a CD-ROM and DVD, magneto-optical media such as a floptical disk, and memory devices such as a ROM and RAM. The program instructions may include machine codes produced by compilers and high-level language codes executable through interpreters.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain exemplary embodiments thereof, it will be understood by those skilled in the art that various changes in form and details may be made therein without departing from the scope of the invention as defined by the appended claims and their equivalents.

## Claims

1. A message handling method, the method comprising:
composing, by a sender terminal, a message (301);
checking whether a translation feature is activated for message translation (303);
transmitting, if the translation feature is not activated, the composed message to a receiver terminal (317); and
translating, if the translation feature is activated, the composed message, and transmitting at least the translated message to the receiver terminal (313).

2. The method of claim 1, wherein the transmitting of the translated message to the receiver terminal (313) comprises:
sending, by the sender terminal, the composed message and a target language indication to a translation server;
translating, by the translation server, the message into a target language indicated by the target language indication;
sending, by the translation server, the translated message to the sender terminal;
sending, by the sender terminal, the translated message to a messaging server; and
sending, by the messaging server, the translated message to the receiver terminal.

3. The method of claim 2, wherein the sending of the translated message to the messaging server comprises:
checking, by the sender terminal, whether an edit command is entered for the translated message (311);
outputting, if an edit command is entered, an editing screen (314); and
editing the translated message using the editing screen.

4. The method of claim 1, wherein the transmitting of the translated message to the receiver terminal comprises:
sending, by the sender terminal, a translation request comprising the composed message and a target language indication to a messaging server;
forwarding, by the messaging server, the translation request and the target language indication to a translation server;
translating, by the translation server, the message into a target language indicated by the target language indication;
sending, by the translation server, the translated message to the messaging server; and
sending, by the messaging server, the translated message to the receiver terminal.

5. The method of any preceding claim, wherein checking whether a translation feature is activated for message translation (303) comprises at least one of:
checking activation of an automatic translation function; and
checking reception of a signal generated by an input unit of the sending terminal, the signal corresponding to selection of a menu item associated with message translation.

6. The method of any preceding claim, further comprising:
setting an option for simultaneous transmission of original and translated messages; and
transmitting, when the simultaneous transmission option is set, a message that comprises the composed message text, the translated message text and a preset separator between the composed message text and the translated message text.

7. The method of any preceding claim, further comprising:
checking, when the receiver terminal receives a message (401), whether the translation feature is activated (403);
displaying, if the translation feature is not activated, the received message (417);
identifying, if the translation feature is activated, the language of the received message (405);
checking whether the identified language is the same as a preset user language (407);
displaying, if the identified language is the same as the preset user language, the received message (417); and
translating, if the identified language is not the same as the preset user language, the received message, and displaying a translated message.

8. The method of claim 7, wherein translating and displaying the translated message comprises:
sending a translation request comprising the received message and the preset user language to a translation server (409);
translating, by the translation server, the message into the preset user language;
sending, by the translation server, the translated message to the receiver terminal; and
displaying, by the receiver terminal, the received message and the translated message (413).

9. The method of claim 7 or 8, wherein displaying the received message comprises displaying, if the received message comprises original message text and translated message text, the original message text and the translated message text in different regions.

10. A message handling system (1000), the system comprising:
a sender terminal (10);
a translation server (400);
a messaging server (300); and
a receiver terminal (20),
wherein the sender terminal (10) sends a translation request for translation of a composed message to the translation server (400), receives a translated message from the translation server (400) and sends the translated message to the messaging server (300),
wherein the translation server (400) translates a message associated with the translation request, and sends the translated message to the sender terminal (10),
wherein the messaging server (300) transmits a message received from the sender terminal (10) to the receiver terminal (20), and
wherein the receiver terminal (20) receives the translated message from the messaging server (300).

11. The system of claim 10, wherein the sender terminal (10) provides a menu item to generate an edit command for editing the translated message received from the translation server (400).

12. The system of claim 10 or 11, wherein the sender terminal (10) sends the translation request for translation of the composed message to the translation server (400) if a signal is generated by an input unit of the sending terminal, the signal corresponding to selection of a menu item associated with message translation or if a message transmission command is entered after activation of an automatic translation function.

13. The system of claim 10, 11 or 12, wherein the sender terminal (10) provides an option for setting simultaneous transmission of original and translated messages, and transmits, if the simultaneous transmission option is set, a message that comprises the composed message text, the translated message text and a preset separator between the composed message text and the translated message text, and
wherein the receiver terminal (20) displays the original message text and the translated message text in different regions after reception of the message.

14. The system of any of claims 10 to 13, wherein the receiver terminal (20) checks, when a message is received, whether a translation feature is activated, displays, if the translation feature is not activated, the received message, identifies, if the translation feature is activated, the language of the received message, checks whether the identified language is the same as a preset user language, sends, if the identified language is not the same as the preset user language, a translation request comprising the received message and a target language indication to the translation server (400), receives a translated message from the translation server (400), and displays the received message and the translated message.

15. A message handling system (1000), the system comprising:
a sender terminal (10);
a messaging server (300);
a translation server (400); and
a receiver terminal (20),
wherein the sender terminal (10) sends a translation request comprising a composed message and a target language indication to the messaging server (300),
wherein the messaging server (300) receives the translation request and the target language indication from the sender terminal (10), forwards the translation request and the target language indication to the translation server (400), receives a translated message from the translation server (400) and sends the translated message to the receiver terminal (20),
wherein the translation server (400) translates a message associated with the translation request into a language indicated by the target language indication, and sends the translated message to the messaging server (300), and
wherein the receiver terminal (20) receives the translated message from the messaging server (300).
